# FASCICULE DE BREVET EUROPEEN

(11) **EP 2 236 355 B1**
(45) Date de publication et mention de la délivrance du brevet: **05.06.2013**
(21) Numéro de dépôt: 10157145.3
(22) Date de dépôt: 22.03.2010
(51) Int. Cl.: B62D 25/08, B60Q 1/04, B60R 19/50, B62D 21/15

(54) **Patte de fixation pour un projecteur et véhicule équipé d'une telle patte**
Befestigungslasche für einen Scheinwerfer und mit dieser Lasche ausgestattetes Fahrzeug
Attachment lug for a headlight, and vehicle equipped with such a lug.

(30) Priorité: 02.04.2009 FR 0952124
(43) Date de publication de la demande: 06.10.2010
(73) Titulaire: Peugeot Citroën Automobiles SA, 78140 Vélizy-Villacoublay (FR)
(72) Inventeur: Roussel, Mathias, 78280, Guyancourt (FR); Benane, Saïd, 94550, Chevilly Larue (FR); Moreau, Cyril, 91300, Massy (FR)

(56) Documents cités:
- DE-A1-102006 023 803
- DE-B3- 10 237 454
- JP-A- 2004 338 510
- JP-U- 1 165 743

## Description

La présente invention concerne une patte de fixation pour un projecteur et un véhicule équipé d'une telle patte.

La présente invention concerne plus particulièrement une patte de fixation d'un premier élément d'un véhicule sur un second élément du véhicule.

Plus particulièrement encore, la patte de l'invention concerne comportant une première partie et une seconde partie disposées au prolongement l'une de l'autre, la première partie étant destinée à être fixée sur un second élément, la seconde partie comprenant une équerre destinée à la fixation dudit premier élément.

La présente invention concerne également un véhicule comprenant des premier, second, et troisième éléments ainsi qu'au moins une patte de fixation du premier élément au second élément.

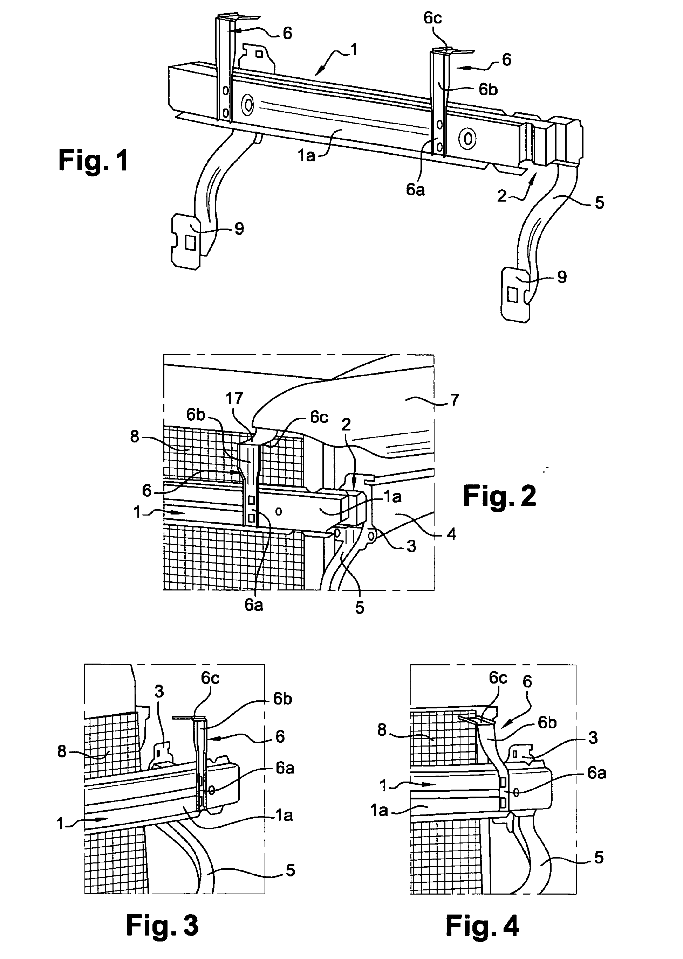

Il est connu des structures de véhicule qui comprennent un sous-ensemble avant destiné à transmettre et absorber une partie de l'énergie d'un choc par déformation, lors d'un choc entre le véhicule et un obstacle externe au véhicule. La figure 1 est une vue en perspective d'un sous-ensemble de la structure avant d'un véhicule automobile qui comprend de façon connue, une poutre transversale 1 dont les extrémités sont fixées chacune à un absorbeur 2 dont la face arrière est reliée à une platine 3 visible sur les vues en perspective des figures 2, 3 et 4. Chaque platine 3 est destinée à être fixées par coopération de forme sur une platine d'extrémité avant d'un brancard.

Un tel sous-ensemble joue également un rôle lors d'un choc « piéton » et comprend à cet effet des jambages 5 s'étendant vers le bas et vers l'avant, chaque partie supérieure du jambage 5 étant reliée par soudage à la platine 3 de l'absorbeur 2. Chacune des platines 3 comporte une platine 9 qui est apte à supporter une poutre inférieure (non représentée) de répartition et d'absorption du choc « piéton » qui s'étend sensiblement à la parallèle de la poutre transversale 1 située au dessus.

La situation de la poutre transversale 1 est telle qu'elle s'étend au devant d'un échangeur thermique 8, à peu près à mi-hauteur de celui-ci.

Il est par ailleurs également connu d'utiliser un tel sous-ensemble afin de fixer des équipements du véhicule, tel qu'un pare-choc ou un projecteur à titre d'exemple. A cet effet, la poutre 1 porte sur sa face avant deux pattes 6 destinées chacune à la fixation d'un boîtier de l'projecteur avant 7.

Chacune des deux pattes 6 comporte une première partie 6a qui est fixée au moyen de deux vis contre la face avant 1a de la poutre 1 et une seconde partie 6b, libre par rapport à la poutre 1, et située dans le plan de la première partie 6a, c'est-à-dire au prolongement cette dernière. La partie supérieure de la seconde partie 6b comporte une extrémité 6c qui est pliée en équerre en direction de l'échangeur thermique 8, le boîtier de l'projecteur 7 étant adapté pour fixer l'projecteur à l'extrémité 6c de la patte 6.

Cette seconde partie 6b de chaque patte 6 s'étend sensiblement verticalement devant le radiateur 8, et l'extrémité 6c pliée en équerre fait saillie vers l'échangeur thermique 8, de sorte que lors d'un choc à faible vitesse, nommé aussi choc réparabilité, la patte 6 vient en contact de l'échangeur thermique 8 ce qui implique son changement. La figure 3 représente la poutre transversale 1, l'un des jambages 5 et l'une des pattes 6 de fixation précitées, avant le choc. La figure 4 montre les dégâts subis par ces constituants, à la suite du choc, la poutre transversale 1 s'étant rapprochée de l'échangeur thermique 8, le jambage 5 s'étant plié et la partie libre 6b de la patte 6 s'étant pliée vers l'échangeur thermique de sorte que l'extrémité en équerre 6c a détérioré l'échangeur thermique 8.

Compte tenu le remplacement de l'échangeur thermique 8, le coût de la réparation augmente, ce qui engendre un démérite du véhicule par rapport aux classements des assurances.
Le document DE 10 2006 023 003 A1 décrit une patte de fixation selon le préambule de la revendication 1.

Un but de la présente invention est de pallier tout ou partie des inconvénients de l'art antérieur relevés ci-dessus.

A cette fin, la patte de fixation selon l'invention, par ailleurs conforme à la définition générique qu'en donne le préambule ci-dessus, est essentiellement **caractérisé en ce que** ladite seconde partie comprend une prolonge formant une butée d'extrémité arrière de la patte et une portion intermédiaire liant la prolonge à l'équerre, ladite portion intermédiaire étant inclinée afin de surélever la partie sommitale de la patte et d'éloigner la butée d'extrémité arrière de la première partie.

La patte selon l'invention se caractérise en ce que la prolonge s'étend dans un plan parallèle à celui de la première partie, ainsi que dans un plan décalé par rapport à celui de la première partie. Un tel écart permet avantageusement de mettre en appui la patte de fixation sur une pièce environnante qui est résistante au choc réparabilité, avant même qu'une autre pièce ne vienne en appui sur une pièce de plus grande fragilité qui serait coûteuse à remplacer.

Selon l'invention encore, la patte de fixation comprend une portion intermédiaire qui a une section droite et comprend une nervure de rigidification transversale dont les extrémités débouchent sur la prolonge et l'équerre de fixation du projecteur afin d'en limiter la rotation de l'une vers l'autre. Cela permet avantageusement de garder la rigidité nécessaire au maintient d'un appui plan entre la patte de fixation et la pièce sur laquelle elle est en appui après déformation issue d'un choc.

L'invention concerne également un véhicule qui est de préférence constitué des premier, second, et troisième éléments ainsi qu'au moins une patte de fixation du premier élément au second élément comportant les caractéristiques susmentionnées, et se caractérise par le fait que la patte de fixation est déformable sous l'effet d'un choc réparabilité, la patte passant à cet effet d'un état initial dans lequel la prolonge est située longitudinalement entre le premier élément et le troisième élément à un état déformé dans lequel la prolonge est en appui sur le troisième élément. Un tel agencement de la patte de fixation permet d'optimiser la conception puisque qu'une partie de celle-ci est inscrite entre deux éléments.

De préférence, ledit premier élément est un projecteur situé à l'avant du véhicule, ledit second élément est une pièce de structure du type d'une poutre transversale s'étendant au droit d'une partie dudit troisième élément qui est du type d'un échangeur thermique porté par une façade technique le contournant, une telle façade étant apte résister à l'appui de la patte de fixation lors d'un choc réparabilité du véhicule contre un obstacle extérieur. Avantageusement, une partie de l'effort du choc réparabilité est alors transmis à la façade technique. Un autre avantage est que la patte de fixation n'est plus mise en appui sur l'échangeur thermique dont la fragilité est reconnue.

De préférence encore, la façade technique s'étend longitudinalement en saillie vers l'avant par rapport à l'échangeur thermique créant de la sorte un épaulement qui éloigne encore plus la face avant de l'échangeur thermique de toute pièce environnante susceptible de le détériorer.

La prolonge s'étend de préférence au droit de la façade technique selon un recouvrement sensiblement à mi-hauteur de celle-ci ce qui garantit un appui constant de la patte lors du choc réparabilité.

Le véhicule selon l'invention se caractérise en ce que la longueur de la patte est supérieure à la profondeur de la poutre transversale de sorte qu'en cas de choc frontal du véhicule contre un obstacle extérieur, la patte (10) passe de la position initiale à la position déformée avant même que la poutre transversale ne vienne en appui contre l'échangeur thermique, une partie de l'effort du choc transitant par la façade technique dédié ce qui améliore encore plus la tenue à la déformation du véhicule en cas de choc.

D'autres particularités et avantages de l'invention apparaîtront encore tout au long de la description ci-après faite des dessins annexés, donnés à titre d'exemples, non limitatifs :
- la figure 5 est une vue en perspective partielle montrant une poutre avant d'absorption de choc frontal selon l'invention, portant une patte de fixation d'un projecteur,
- la figure 6 est une vue en perspective à échelle agrandie de la patte de fixation de la figure 5 prise séparément,
- la figure 7 est une représentation schématique partielle selon une coupe longitudinale de la patte de fixation et des équipements au devant desquels la patte de fixation s'étend, dans son état initial avant un choc frontal,
- la figure 8 est une représentation schématique analogue à la figure 7 montrant les effets d'un choc frontal sur la patte de fixation.

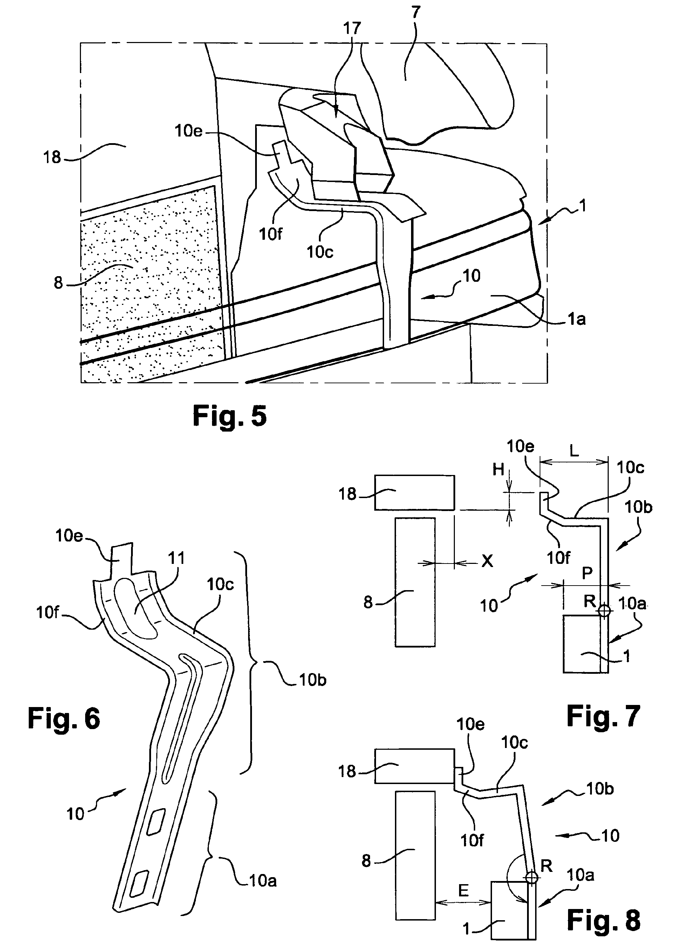

En se reportant à la figure 5, une patte de fixation 10 est représentée dans sa position initiale avant déformation issue d'un choc frontal du véhicule par rapport à un obstacle extérieur à celui-ci.

La patte de fixation 10 est ici utilisée afin de porter un projecteur avant 7. A cet effet, la patte 10 comprend une partie nommée dans ce qui suit équerre de fixation, qui s'étend sensiblement à l'horizontal. L'équerre 10c délimite une plaque d'appui contre laquelle une entretoise 17 de fixation est liée par un moyen de fixation du type à encliquetage. Une telle entretoise 17 est également montée solidaire au projecteur afin de créer l'un de ses points de fixation à la structure du véhicule.

La patte de fixation comprend en outre une prolonge 10e et une portion intermédiaire 10f assurant la liaison de la prolonge à l'équerre. La portion intermédiaire 10f est inclinée vers le haut selon une section transversale de la patte de fixation, ce qui permet de disposer la prolonge 10e à l'arrière du projecteur 7, notamment selon une disposition entre l'entretoise 17 et une partie de la façade technique qui prend la référence 18 sur la figure 5.

La prolonge 10e est assimilable de par sa fonction à une butée de retenue qui tend à limiter, voire interdire, la mise en appui de l'équerre sur l'échangeur thermique qui est porté par la façade technique le contournant. Pour ce faire, l'équerre 10c est prolongée vers l'arrière par la portion intermédiaire 10f d'inclinaison vers le haut, et par la prolonge 10e qui s'étend sensiblement à la vertical, de façon sensiblement parallèle à une première partie 10a et à une seconde partie 10b de la patte disposées respectivement l'une au prolongement de l'autre.

La première partie 10a est de préférence fixée sur un second élément 1 du véhicule qui est du type d'une poutre transversale qui s'étend en tout ou partie au droit de l'échangeur thermique que l'invention vise à protéger contre toute déformation lors d'un choc frontal.

La seconde partie 10b de la patte comprenant l'équerre de fixation du projecteur 7 qui s'étend sensiblement à angle droit de ladite première partie 10a de la patte. L'équerre de fixation 10c et la première partie 10a de la patte comprend une nervure de rigidification qui est obtenue par le biais d'une opération d'emboutissage.

La patte 10 comprend également une nervure de rigidification 11 qui est située au niveau de la portion intermédiaire 10f et dont les extrémités débouchent au niveau de la prolonge 10e et de l'équerre 10c dans le but de limiter le déplacement en rotation de ladite prolonge vers l'équerre lorsque la prolonge 10e vient en appui sur la façade technique.

L'équerre de fixation 10c s'étendant sensiblement à l'horizontal, au droit de l'échangeur thermique 8, est prolongée par la portion intermédiaire 10f et la prolonge verticale 10e de sorte que la partie sommitale de la patte de fixation 10 est située au niveau d'une partie médiane de la façade technique. En cas de choc frontal du véhicule contre un obstacle, la patte 10 se déforme selon un mouvement de rotation autour d'un axe transversal au véhicule qui s'étendant de manière sensiblement parallèle à la ligne R supérieure de jonction entre la première partie 10a de la patte de fixation et la face avant de la poutre transversale. Une telle rotation de la patte 10 rapproche la partie sommitale susmentionnée de la façade technique et évite avantageusement à ce que l'équerre 10c ne vienne en appui sur l'échangeur thermique.

Une telle conception de la patte 10 de fixation permet d'avoir une face arrière de la prolonge 10e qui s'étend dans un plan décalé d'une longueur L par rapport à la première partie 10a, ce qui permet avantageusement de mettre la partie sommitale de la patte en appui sur la façade technique avant même que la poutre transversale sur laquelle est fixée la première partie 10a de la patte 10 ne vienne en appui sur l'échangeur thermique. En d'autre terme, la longueur L de l'ensemble formé de l'équerre 10c, la portion intermédiaire 10f et la prolonge 10e est supérieure à la profondeur P de la poutre transversale. En cas de choc frontal du véhicule contre un obstacle extérieur, la patte 10 passe de la position initiale à la position déformée avant même que la poutre transversale ne vienne en appui contre l'échangeur thermique.

Pour améliorer d'avantage la protection de l'échangeur thermique contre une détérioration provenant de sa mise en appui de l'équerre 10c, la façade technique qui contourne notamment l'échangeur est avancée par rapport à un axe parallèle à la normal de la face avant de l'échangeur, d'un écart repéré X formant un épaulement entre la façade technique et l'échangeur thermique, comme cela est rendu visible aux figures 7 et 8.

Un véhicule équipé d'une patte de fixation 10 permet, comme cela est représenté à la figure 8, de garder un espace E entre la poutre transversale et la face avant de l'échangeur thermique après un choc frontal de la catégorie d'un choc réparabilité. N'étant ainsi plus détérioré par la patte 10 de fixation du projecteur 7, l'échangeur thermique ne doit plus être changé après un choc réparabilité, ce qui permet d'abaisser le coût des réparations.

## Revendications

1. Patte (10) de fixation d'un premier élément (7) d'un véhicule sur un second élément (1) du véhicule, ladite patte (10) comportant une première partie (10a) et une seconde partie (10b) disposées au prolongement l'une de l'autre, la première partie (10a) étant destinée à être fixée sur le second élément (1), la seconde partie (10b) comprenant une équerre (10c) destinée à la fixation dudit premier élément (7), **caractérisée en ce que** ladite seconde partie (10b) comprend une prolonge (10e) formant une butée d'extrémité arrière de la patte et une portion intermédiaire (10f) liant la prolonge (10e) à l'équerre (10c), ladite portion intermédiaire (10f) étant inclinée afin de surélever la partie sommitale de la patte et d'éloigner la butée d'extrémité arrière de la première partie (10a).

2. Patte (10) selon la revendication 1, **caractérisée en ce que** la portion intermédiaire (10f) est inclinée vers le haut par rapport à l'équerre (10c) afin d'élever la prolonge (10e) par rapport à l'équerre.

3. Patte (10) selon la revendication 1 ou 2, **caractérisée en ce que** la prolonge (10e) s'étend dans un plan parallèle à celui de la première partie (10a), ainsi que dans un plan décalé par rapport à celui de la première partie (10a).

4. Patte (10) selon la revendication 2 ou 3, **caractérisée en ce que** la portion intermédiaire (10f) de la patte (10) a une section droite et comprend une nervure de rigidification (11) transversale dont les extrémités débouchent sur la prolonge (10e) et l'équerre (10c) afin d'en limiter la rotation de l'une vers l'autre.

5. Véhicule comprenant des premier (7), second (1), et troisième (8, 18) éléments ainsi qu'au moins une patte (10) de fixation du premier élément (7) au second élément (1) conforme à l'une quelconque des revendications 1 à 4, le véhicule étant **caractérisé en ce que** la patte de fixation est déformable sous l'effet d'un choc réparabilité, passant à cet effet d'un état initial dans lequel la prolonge (10e) est située longitudinalement entre le premier élément (7) et le troisième élément (18) à un état déformé dans lequel la prolonge (10e) est en appui sur le troisième élément (18).

6. Véhicule selon la revendication 5, **caractérisé en ce que** ledit premier élément (7) est un projecteur situé à l'avant du véhicule, ledit second élément (1) est une pièce de structure du type d'une poutre transversale s'étendant au droit d'une partie dudit troisième élément (8), ledit troisième élément (8, 18) étant du type d'un échangeur thermique porté par une façade technique le contournant qui est apte à résister à l'appui à la patte (10) de fixation lors d'un choc réparabilité du véhicule contre un obstacle extérieur.

7. Véhicule selon la revendication 6, **caractérisé en ce que** la façade technique s'étend longitudinalement en saillie vers l'avant par rapport à l'échangeur thermique créant de la sorte un épaulement (X).

8. Véhicule selon la revendication 6 ou 7, **caractérisé en ce que** la prolonge (10e) s'étend au droit de la façade technique selon son recouvrement sensiblement à mi-hauteur (H).

9. Véhicule selon l'une quelconque des revendications 6 à 8, **caractérisé en ce que** l'équerre de fixation (10c) s'étend sensiblement à la perpendiculaire de la première partie (10a) et est orientée vers l'arrière du véhicule en direction de l'échangeur thermique (8).

10. Véhicule selon l'une quelconque des revendications 6 à 9, **caractérisé en ce que** la première partie (10a) de la patte de fixation (10) est fixée sur la face avant de la poutre transversale.

## Patentansprüche

1. Lasche (10) zum Befestigen eines ersten Elements (7) eines Fahrzeugs auf einem zweiten Element (1) des Fahrzeugs, wobei die besagte Lasche (10) einen ersten Abschnitt (10a) und einen zweiten Abschnitt (10b) umfasst, die nacheinander angeordnet sind, und der erste Abschnitt (10a) dazu bestimmt ist, auf dem zweiten Element (1) befestigt zu werden, und der zweite Abschnitt (10b) einen Winkel (10c) umfasst, der zur Befestigung des besagten ersten Elements (7) bestimmt ist, **dadurch gekennzeichnet, dass** der besagte zweite Abschnitt (10b) einen Fortsatz (10e) umfasst, der einen hinteren Anschlag der Lasche bildet, und einen Zwischenabschnitt (1 Of), der den Fortsatz (10e) mit dem Winkel (10c) verbindet, und der besagte Zwischenabschnitt (10f) schräggestellt ist, um den Scheitelabschnitt der Lasche anzuheben, und den hinteren Anschlag vom ersten Abschnitt (10a) fernzuhalten.

2. Lasche (10) nach Anspruch 1, **dadurch gekennzeichnet, dass** der Zwischenabschnitt (10f) im Verhältnis zum Winkel (10c) nach oben geneigt ist, um den Fortsatz (10e) im Verhältnis zum Winkel zu heben.

3. Lasche (10) nach Anspruch 1 oder 2, **dadurch gekennzeichnet, dass** sich der Fortsatz (10e) über eine Ebene parallel zu jener des ersten Abschnitts (10a) erstreckt, sowie über eine Ebene, die im Verhältnis zu jener des ersten Abschnitts (10a) versetzt ist.

4. Lasche (10) nach Anspruch 2 oder 3, **dadurch gekennzeichnet, dass** der Zwischenabschnitt (10f) der Lasche (10) einen geraden Abschnitt, und eine quer verlaufende Versteifungsrippe (11) aufweist, deren Enden in den Fortsatz (10e) und in den Winkel (10c) münden, um deren Drehbewegung zueinander zu beschränken.

5. Fahrzeug umfassend erste (7), zweite (1) und dritte (8, 18) Elemente, sowie zumindest eine Lasche (10) zum Befestigen des ersten Elements (7) auf dem zweiten Element (1) nach irgendeinem der Ansprüche 1 bis 4, wobei das Fahrzeug **dadurch gekennzeichnet ist, dass** die Befestigungslasche unter Einwirkung eines reparierbaren Zusammenstoßes verformt werden kann, und dazu von einem ursprünglichen Zustand, in dem sich der Fortsatz (10e) der Länge nach zwischen dem ersten Element (7) und dem dritten Element (18) befindet, in einen verformten Zustand übergeht, bei dem der Fortsatz (10e) auf dem dritten Element (18) aufliegt.

6. Fahrzeug nach Anspruch 5, **dadurch gekennzeichnet, dass** das besagte erste Element (7) ein Scheinwerfer ist, der sich vorne am Fahrzeug befindet, und das zweite Element (1) ein Strukturbauteil in der Art eines Querträgers ist, der sich gegenüber einem Teil des besagten dritten Elements (8) erstreckt, und das besagte dritte Element (8, 18) eine Art Wärmetauscher ist, der durch eine technische Fassade gehalten wird, die ihn umgibt, und die bei einem reparierbaren Zusammenstoß des Fahrzeugs mit einem externen Hindernis in der Lage ist, dem Druck auf die Lasche (10) zu widerstehen.

7. Fahrzeug nach Anspruch 6, **dadurch gekennzeichnet, dass** die technische Fassade im Verhältnis zum Wärmetauscher der Länge nach, nach vorne überstehend verläuft, sodass daraus ein Absatz (X) entsteht.

8. Fahrzeug nach Anspruch 6 oder 7, **dadurch gekennzeichnet, dass** der Fortsatz (10e) gegenüber der technischen Fassade in etwa auf halber Höhe (H) entlang ihrer Überdeckung verläuft.

9. Fahrzeug nach irgendeinem der Ansprüche 6 bis 8, **dadurch gekennzeichnet, dass** sich der Befestigungswinkel (10c) in etwa senkrecht zum ersten Abschnitt (10a) erstreckt, und zur Rückseite des Fahrzeugs, in Richtung des Wärmetauschers (8) gerichtet ist.

10. Fahrzeug nach irgendeinem der Ansprüche 6 bis 9, **dadurch gekennzeichnet, dass** der erste Abschnitt (10a) der Befestigungslasche (10) an der Vorderseite des Querträgers befestigt ist.

## Claims

1. Attachment lug (10) of a first element (7) of a vehicle on a second element (1) of the vehicle, said lug (10) comprising a first portion (10a) and a second portion (10b) arranged in the extension of one another, with the first portion (10a) intended to be fixed on the second element (1), with the second portion (10b) comprising a bracket (10c) intended for the fastening of said first element (7), **characterised in that** said second portion (10b) comprises an extension (10e) forming a rear end stop of the lug and an intermediary portion (10f) connecting the extension (10e) to the bracket (10c), said intermediary portion (10f) being inclined so as to raise the summit portion of the lug and move away the rear end stop from the first portion (10a).

2. Lug (10) according to claim 1, **characterised in that** the intermediary portion (10f) is inclined upwards in relation to the bracket (10c) in order to raise the extension (10e) in relation to the bracket.

3. Lug (10) according to claim 1 or 2, **characterised in that** the extension (10e) extends in a plane parallel to that of the first portion (10a), as well as in a plane offset in relation to that of the first portion (10a).

4. Lug (10) according to claim 2 or 3, **characterised in that** the intermediary portion (10f) of the lug (10) has a straight section and comprises a transversal reinforcing rib (11) of which the ends exit onto the extension (10e) and the bracket (10c) in order to limit the rotation of one towards the other.

5. Vehicle comprising first (7), second (1), and third (8, 18) elements as well as at least one attachment lug (10) of the first element (7) to the second element (1) in accordance with any of claims 1 to 4, the vehicle **characterised in that** the attachment lug can be deformed under the effect of a reparability impact, passing as such from an initial state wherein the extension (10e) is located longitudinally between the first element (7) and the third element (18) to a deformed state wherein the extension (10e) is pressing against the third element (18).

6. Vehicle according to claim 5, **characterised in that** said first element (7) is a headlight located at the front of the vehicle, said second element (1) is a structural part of the transversal beam type extending at the right of a portion of said third element (8), said third element (8, 18) being of the heat exchanger type supported by an instrument panel bypassing it which is able to resist the pressing of the attachment lug (10) during a reparability impact of the vehicle against an exterior obstacle.

7. Vehicle according to claim 6, **characterised in that** the instrument panel extends longitudinally protruding towards the front in relation to the heat exchanger creating as such a shoulder (X).

8. Vehicle according to claim 6 or 7, **characterised in that** the extension (10e) extends at the right of the instrument panel according to it covering substantially at mid-height (H).

9. Vehicle according to any of claims 6 to 8, **characterised in that** the fastening bracket (10c) extends substantially perpendicularly to the first portion (10a) and is oriented towards the rear of the vehicle in the direction of the heat exchanger (8).

10. Vehicle according to any of claims 6 to 9, **characterised in that** the first portion (10a) of the attachment lug (10) is fixed on the front surface of the transversal beam.
